# EUROPEAN PATENT APPLICATION

(11) **EP 1 311 122 A2**
(43) Date of publication of application: **14.05.2003**
(21) Application number: 02257368.7
(22) Date of filing: 23.10.2002
(51) Int. Cl.: H04N 7/173

(54) **Using NAS appliance to build a non-conventional distributed video server**

(30) Priority: 23.10.2001 US 1735
(71) Applicant: QUANTUM CORPORATION, Milpitas, CA 95035 (US)
(72) Inventor: Tsao, Sheng Ted Tai, San Jose, California 95132 (US)
(74) Representative: Charig, Raymond Julian

(57) **Abstract**

A video server for communicating content to a plurality of clients, including one or more network attached storage (NAS) servers, each NAS server storing content files for access by one or more clients; a switch for connecting the clients to the NAS servers in response to control signals, via a communication link; and a management control station connected to the clients and the NAS servers via the switch, wherein the management control station receives a request for a content file from a client, and selectively establishes a data stream between that client and an NAS server which stores the requested content file, such that the NAS server provides the content file to the client via the data stream, independent of other NAS servers.

## Description

### Field of the Invention

The present invention relates generally to video servers, and more particularly to distributed video servers.

### Background of the Invention

Video servers provide clients with access to video images stored in the video servers upon client request. Each video server can provide the same or different video images to one or more clients at the same time. Video on demand systems provide content distribution and store several audio-video and/or digital content files (e.g., movies). The content files are selectively retrieved under client control, whereby one or more users select and access one or more video files.

There are several types of conventional video servers. Some of the video servers utilize multiple symmetric multi processor (SMP) machines. Each SMP includes several processors (e.g., 2, 4, 8, 16, etc. CPUs) that share a resource such as memory. SMP machines typically offer poor performance when the number of CPUs scale up. Because two or more CPUs share a common resource such as memory, there is memory bus contention between different CPUs.

Other conventional video servers utilize multi-node massively parallel processor (MPP) machines including a clustering together of CPUs that do not share resources such as memory (i.e., each CPU has its own memory). Though the CPUs do not share common memory, the CPUs may commonly support a distributed file system on top,of a group of nodes, wherein the video contents are stored on the file system. However, the video server on a node relies heavily rely on a communication channel to receive requests from clients and to deliver video contents stored on distributed file system to the clients. This requires complex coordination between the nodes through intra-node communication channel. Further, the communication channel between the nodes becomes a bottleneck. Such video servers are also costly.

There is, therefore a need for an inexpensive distributed video server which provides high performance, without resource contention or communication bottleneck, that is scalable.

### Brief Summary of the Invention

The present invention satisfies these needs. In one invention the present invention provides a distributed video server including network attached storage appliance (NAS) servers for storing content for access by clients. Such NAS servers are less expensive than conventional SMP or MPP based video servers and provide concurrent data streams to multiple clients with high efficiency.

NAS severs are used directly to deliver video streams to clients. The video server is scalable such that additional NAS servers can be utilized to provide more data steams to more clients. As such, the number of streams that can be delivered is essentially unlimited. Each NAS server runs independently without sharing resources with other NAS servers, and is efficient, thereby eliminating bus contention problem of multi-node SMP video servers. In addition, unlike MPP based video servers, in a video server according to the present invention there is no communication bottleneck between nodes and there is no need for intra-node routing and communication. Clients are connected to management controller via switches/routers, and the management controller assigns a set of client requests to each NAS server, whereby each NAS server delivers a requested data stream to the corresponding client via a communication link. The per stream price is low and a large number of streams are delivered to the end users.

With the rapid growth of Internet, the need for delivering multimedia on the Internet is growing. While the conventional video (multimedia) servers are powerful they are very expensive. With the advancement of technologies in the area of networks and network appliances, the present invention provides a distributed video server based on network appliances such as NAS servers.

### Brief Description of the Drawings

These and other features, aspects and advantages of the present invention will become understood with reference to the following description, appended claims and accompanying figures where:
FIG. 1A shows an example simplified block diagram of an embodiment of a video server including NAS servers according to the present invention;
FIG. 1B shows an example block diagram of an embodiment of an NAS server;
FIG. 2 shows another data flow in the example video server of FIG. 1A;
FIG. 3A shown an example flowchart of the steps of obtaining and maintaining NAS content file information;
FIG. 3B shows an example flowchart of an embodiment of the steps of providing video service according to the present invention;
FIG. 3C shows an example flowchart of another embodiment of the steps of providing video service according to the present invention ;
FIG. 4 shows an example flowchart of an embodiment of the steps of fault tolerance in a video server according to the present invention; and
FIG. 5 shows another example block diagram of the video server of FIG. 1 with a more details of the management controller.

In the drawings, like elements are designated by like reference numbers.

### Detailed Description of the Invention

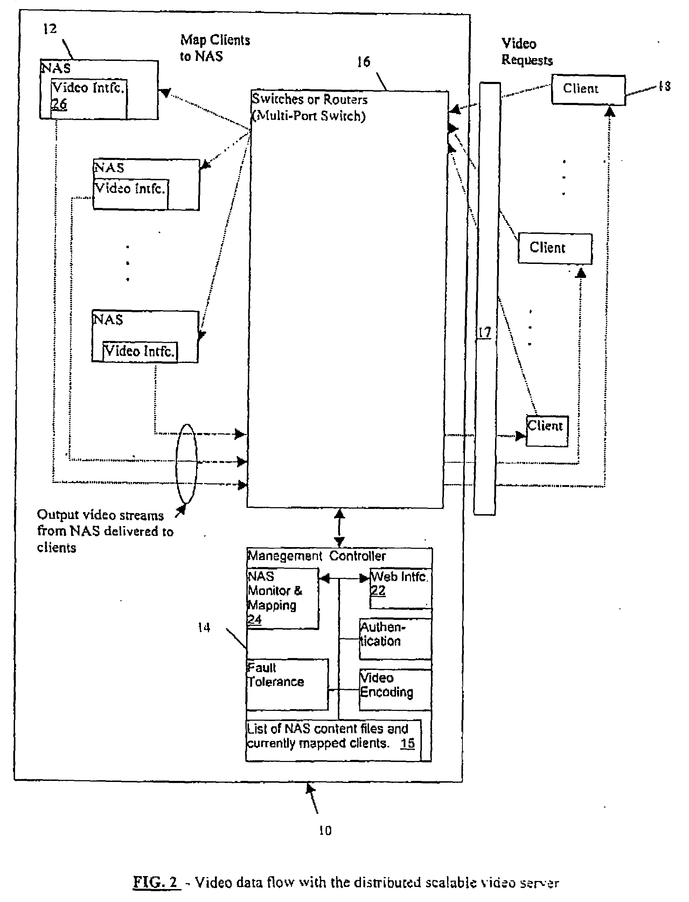

FIG. 1A shows a simplified block diagram of a distributed video server 10 according to an aspect of the present invention. The video server 10 comprises one or more network attached storage (NAS) servers 12 connected to a management controller (management control station) 14 via one or more switches (routers) 16. One or more client devices (e.g., personal computers) 18 are connected to the management controller 14 via a communication network 17. Each NAS server 12 stores content files 13 for access by clients 18, wherein the management controller 14 maintain a list 15 (FIG. 2) of content files stored on each NAS sever 12. In one example, the management controller 14 hosts a video server Web site to perform administration tasks and distribute client's requests to specific NAS servers 12 up to the maximum concurrent video streams that each NAS server 12 can deliver.

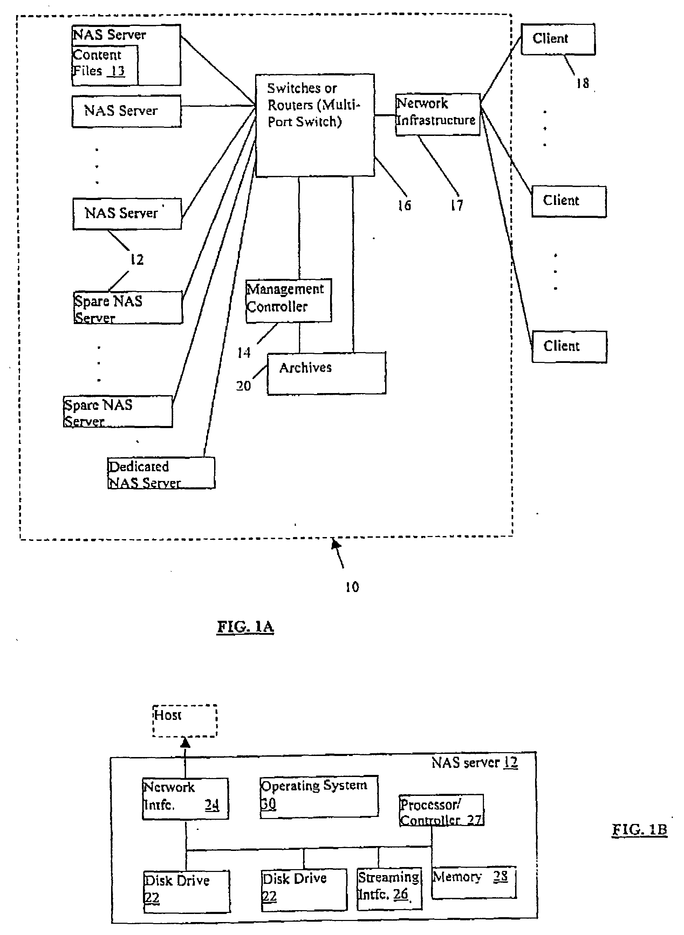

In one example shown in FIG. 1B, a Network Attached Storage (NAS) server 12 comprises a system unit including one or more storage media such as disk drives 22, and network interface 24 such as Gigabits or 100BT Ethernet card for user access to storage media 22. In another example, an NAS server 12 can comprise a simplified and dedicated computer system (including processor 27 and memory 28) to provide specialized services such as e.g. used for file server, email server, or Web server. Due to its simplicity and specialized operating system (OS) 30 environment that provides specialized service, an NAS server 12 can provide users a more efficient and affective way to access data than a typical computer system.

The network 17 can comprise e.g. the Internet or LAN/WAN (Local Area Network/Wide Area Network) infrastructure between the clients 18 and the video server system 10. For example, a client system 18 located in France is connected to the video server 10 in U.S.A. by a LAN/WAN network infrastructure 17 (e.g., Internet).

In one version, upon receiving requests for content files (e.g., video) from clients 18, the management controller 14 maps a fixed number of clients 18 to each specific NAS server 12 and allows each NAS server 12 to deliver video streams directly to the corresponding group of clients 18. The NAS servers 12 are clustered together by switches or routers 16. Each NAS server 12 runs independently without support of a distributed file system between the NAS servers 12, and as such there is no need for intra-node communication between the NAS servers 12.

In one example, the video server 10 provides a virtual movie theatre for several clients. Initially, the management controller (e.g., Web host) 14 accepts reservations of up to 500 clients 18 before the scheduled movie begins. Each NAS server 12 can provide multiple data streams to multiple clients 18. The management controller 14 assigns maximum number of clients 18 to each NAS server 12 based on the maximum number of video stream each NAS server 12 can deliver.

FIG. 2 shows an example data flow/stream diagram between the video server 10 and the clients 18, wherein data flow is shown in dashed lines. The video server 10 includes a client interface software module (e.g., Web interface) 22 in the management controller 14 which accepts requests from clients 18 via Web and passes client requests to an NAS Monitor module 24. The NAS Monitor software module 22 in the management controller 14 monitors status of one or more NAS servers 12 and selectively provides mapping between each requesting client 18 to an NAS server 12. A data streaming interface 26 in each NAS server 12 represents a software module which provides service for reading video contents from the NAS server 12 and sending the data through the network to the requesting client 18 (e.g., streaming).

### NAS Servers

Each NAS server 12 can provide essentially the same data stream rate (throughput) to the assigned clients 12. Each client process thread in the NAS server 12 can share equal amount of data bandwidth provided by the NAS server 12 as other client threads in that NAS server 12.

Preferably, a video server 10 is capable of delivering multiple equal rates of concurrent video streams to multiple clients, such as e.g. 3 Mbits/sec or 6 Mbits/sec per video stream, for two client threads, each client thread receives about 3 Mbytes/sec of throughput. For three client threads, each client thread essentially receives 2 Mbytes/sec, while for four client threads, each client thread essentially receives 1.5 Mbytes/sec, and so on. For example, if an NAS server 12 can provide 6Mbyte/sec data throughput on a 100BaseT Ethernet interface, for two clients 18 assigned to the NAS server 12, each client 18 is provided with approximately 3Mbyte/sec data bandwidth.

The NAS server 12 can be used for providing video data streams (playing video), and each provides concurrent video streams. For example MPEG video files are placed on NAS servers 12 (e.g., Snap(TM) server), and played back using MS MediaPlayer(TM). Other media file types can also be stored. In one version, an average Snap2000(TM) sever including a 133 MHz Pentium CPU/32MB memory, can provide 5.6 Mbytes/sec on a 100baseT Ethernet interface. At 3 mbits/sec per video stream, that NAS server 12 can provide approximately 15 concurrent video streams. Using inexpensive NAS server, the cost per data stream can be reduced dramatically.

With explosive growth of the Internet, the interactive multimedia market is poised for rapid growth. The media server system plays a critical role in this market, such as the video server 10 provided by the present invention.

In the following sections, example requirements for a Snap(TM) NAS server 12 for use in the video server 10, are provided.

Suitable NAS servers 12 for use in the present invention provide concurrent video streams. Such NAS servers 12 can be used in e.g. supporting business applications such as online movie theatre, online educational training class, video on demand (VoD), etc. In video on demand (VoD), random access requests from each client 18 are processed, instead of simultaneous streaming of same video data where same video data is provided to multiple clients 18 at the same time using multiple data streams from the NAS server's memory buffer cache. For example a NAS server 12 can provide minimum 4 concurrent stable video streams (e.g., 4 different movies) to 4 different clients 18 at the same time. Random requests in time from different clients 18 are distributed to different NAS servers 12 to avoid bottleneck by accessing different video contents on a single NAS sever 12, specially for video on demand. Further, in another version, two or more NAS servers can deliver content files to one client via two data streams.

In one example, providing VoD for several (e.g., 2 to 3) different video contents is accomplished using several Snap2000(TM) NAS servers 12, wherein each such NAS server 12 can include as many as 11 hours 3Mbits/sec video content. The management controller 14 can assign each specific client 18 request for a specific video content to one or more NAS servers 12, and assign other client requests for other video contents to other corresponding NAS servers.

A video server 10 according to the present invention further provides video on demand for viewing e.g. a specific video from an archived video library, where thousands of video content files are stored. The video server 10 is connected to a video archive storage 20 to retrieve the desired video at any time. A dedicated NAS server provides such a service. The infrastructure can be modified based on access patterns to meet bandwidth needs.

If one NAS server 12 supports fifteen concurrent video streams, then two NAS servers 12 can support thirty concurrent video streams. For thirty clients 18, if the clients 18 require the same movies then the two NAS servers 18 provide the same identical video to the thirty clients concurrently (thirty different video streams). Each NAS server 12 serves fifteen clients 18. If there are thirty five clients 18, then three such NAS servers 12 are utilized to provide the bandwidth required by the thirty five clients 18.

When clients access the management station at different times for different or same video contents (i.e., video on demand), the management controller 14 selectively assigns clients 18 to NAS servers 14. The management controller 14 maintains a list of video contents for each NAS sever. Whenever a client 18 submits a video request, the management controller checks that list and assigns that requesting client 18 to the NAS server 12 that stores the requested content file (e.g., video content, audio content, etc).

The storage volume capacity of each NAS server 12 can be selected as desired. For example, a one hour 3 Mbits/sec stream video movie may require 1.8 GB of disk space (3Mbits x 3600 + overhead in RAID or file system greater than or equal to 1.35 GB + overhead). An example 20GB Snap2000 (TM) NAS server 12 may store approximately 11 hours of movie, while a 120GB Snap4000 (TM) can store about 66 hours of video. With a 6Mbits/sec video stream, the number of hours of video movie that can be stored is reduced to the half of the number mentioned above. In one example, each NAS server 12 can store 3 to 4 movies, and the NAS servers 12 can be connected to a video archive 20 to access large volumes of video contents.

### Content Delivery Method

The management controller 14 "hides" the NAS servers 12 from the clients 18, whereby the clients interface to the management controller 14 and are transparently and selectively provided with requested video streams from the multiple NAS servers 12. The clients 18 access only one point, the management controller 14, and based on client requests the management controller 14 selectively assigns different links (streams) for different NAS servers 12 to different clients 18.

In one embodiment, the video contents management controller 14 maintains a list of video sources/files 13 stored on the NAS servers 12, and selectively maps a specific video source to serve a client 18, and to copy or encode the video source on an NAS server 12, or accept reservation for client who subscribe for a video, etc.

As shown in FIG. 2, the clients 18 communicate with the management controller 14, and the management controller maps clients to appropriate NAS server 12 (via the switches/routers), wherein each NAS server provides date streams one or more mapped clients independent of other NAS servers 12 (e.g., FIG. 2). The management controller 14 can be exposed to the clients 18 using a Web site or dedicated network station. As such, the management controller 14 provides infrastructure to organize network attachment storage servers 12 to form the virtual video server 10.

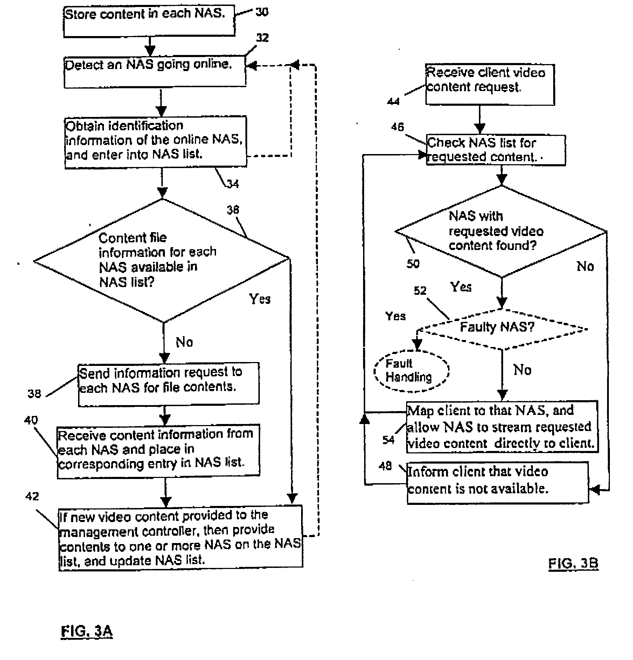

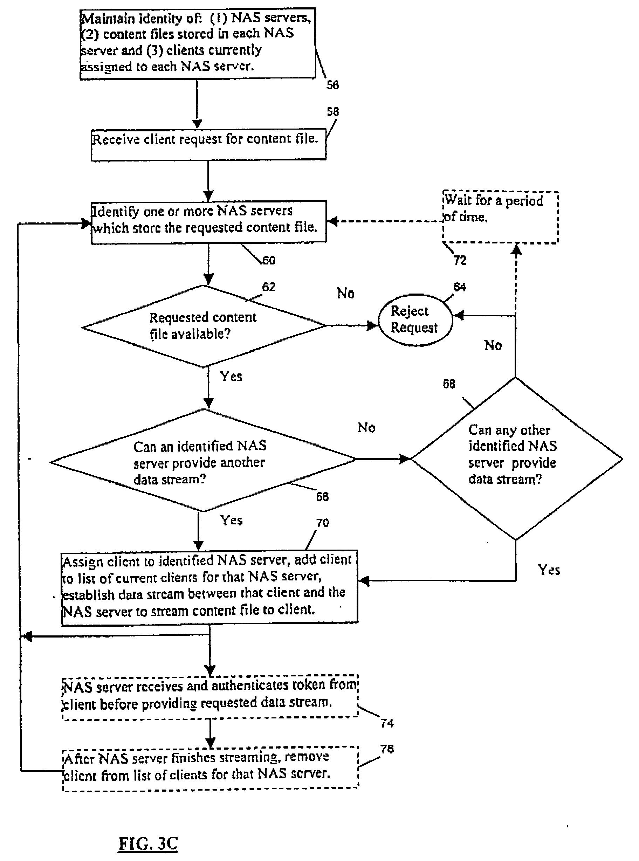

Referring to FIGs. 3-4, example flowcharts of an embodiment of the steps of content delivery according to the present invention is shown. In one version, the management controller 14 is configured to perform said steps.

Referring to example steps in FIG. 3A, the NAS servers 12 are interconnected to the management controller 14, and content files are stored in each NAS server 12 (step 30). Each NAS server 12 that comes on line is detected (step 32), and identification information for the NAS server (e.g., IP address) is obtained and entered into the NAS list 15 (step 34). if content file information for an NAS server 12 is not in the NAS list (step 36), then an information request is sent to the NAS server 12 for file contents (step 38). The file content information received from each NAS server 12 is stored in the NAS list 15 for the corresponding NAS server 12 (step 40). Further, if new video content is provided to the video server 10, the video contents are stored on or more NAS servers for access by clients 18, and the NAS list is updated accordingly (step 42).

Referring to steps in FIG. 38, upon receipt of request from a client 18 for content (e.g., video content) (step 44), the NAS list 15 is checked for the requested content (step 46). If an NAS server 12 with the requested content is not found, the client 18 is informed that the requested video content is unavailable (step 48). Otherwise, if such an NAS server 12 is found (step 50), it is optionally determined if the found NAS server is faulty (step 52). If so, fault handling is performed (described further below), otherwise, the requesting client is mapped to the found NAS server, and the NAS server streams the requested content directly to that client (step 54).

Referring to FIG. 3C, in another example, the management controller 14 maintains in the NAS list 15, a list of NAS servers 12, list of content files on each NAS server 12, and list of clients currently mapped/assigned to each NAS server 12 for streaming (step 56). Upon receiving a client request for a content file (step 58), an attempt is made to identify from the NAS list 15, one or more NAS servers 12 that store the requested content file(step 60). If the requested content file is unavailable (step 62), then the request is rejected and client 18 is so informed (step 64).

If one of the data identified NAS servers 12 can provide another data stream (depending on the maximum number of data streams and bandwidth that the NAS server can provide) (step 66, 68), then the request is assigned to that identified NAS server, and client identification added to the client list for that NAS server (step 70). Otherwise, either the request is rejected, or optionally after a time period the ability of said identified NAS servers is checked to assign the request to (step 72). As described hereinbelow, the assigned NAS server 12 can optionally authenticate the client before providing the requested content file via a data stream (step 74). Further, optionally, after an NAS server 12 finishes streaming to a client 18, the client is removed from the NAS list as assigned to that NAS server (step 76).

In one version of the video server 10, each NAS server 12 authenticates a token from a client 18 assigned to that NAS server 12. In one example, the token is the IP address of the client 18, but it can be any other unique identifying information. At the time a client 18 requests video content (e.g., reservation), the management controller 14 optionally sends back to that client 18 a token (a ticket) indicating which NAS server 12 the management controller 14 has mapped/assigned the client 18 to for receiving streaming video content from the assigned NAS server 12. Then, upon communication with the assigned client 18, each NAS server 12 receives a token from that client 18, and authenticates by using authentication information previously provided to the NAS server 12 by the management controller 14 as to the identity of that client 18.

As such, each assigned client 18 automatically starts to retrieve video stream based on the token received (e.g., at a predetermined time). Each NAS server 12 authenticates the assigned client 18 based on the information received from management controller 14, and delivers video contents directly to the client 18 upon authentication. A large scale movie theatre chain can be provided based on the number of small-scale satellite online movie theater distributed among different regions.

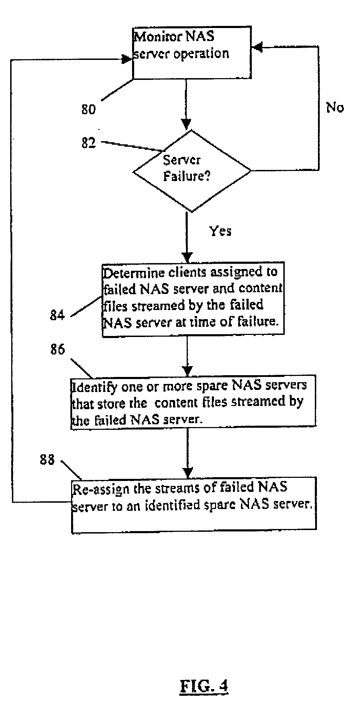

The video server 10 can further provide fault handling. Each individual NAS server 12, including several disk drives, can be configured with e.g. RAID1 or RAID5. This provides data protection at the disk level in each NAS server, against fault of a single disk. Further, as shown by example steps in FIG. 4, one or more spare NAS servers 12 may store same content files as one or more NAS servers 12, whereby the video server 10 provides NAS sever network fault handling (e.g. due to an NAS server fault). In one example implementation, the management controller 14 monitors all NAS server 12 operations (step 80), and upon detecting an NAS server failure (step 82), determines the content files provided to clients mapped to the faulty/failed NAS server (step 84), utilizes a spare NAS server that includes the content files (step 86) to take the assigned workload off a faulty NAS server and provide content to the client assigned to the faulty NAS server (step 88). The ratio between the number of spare NAS servers and the total number of NAS servers is selected based on cost and level of fault tolerance desired.

A video server 10 according to the present invention is scalable by adding or removing NAS servers 12 depending on data bandwidth, data rate and data throughput requirements. This allows the video server 10 to support a wide range of needs and clients 18 from small to large, and provide a scalable distributed video server for virtually unlimited number video streams.

Each NAS server 12 uses a network interface for communication with the management controller and the clients via a communication network 17. An example is IP/Ethernet connection, wherein the IP switches/routers 16 are used to deliver the video contents from the NAS servers 12 to clients 18 such as personal computers via the Internet (IP Internet connection). Other suitable connection include e.g. Ethernet to ADSL router to deliver the video streams from NAS servers 12 to TV units with a set Top box via e.g. cable. Other network interfaces are possible and contemplated by the present invention.

The number of servers 12 and switches 16 depends on the bandwidth required of the video server 10. For example, in a switch 16 connected to a 1-Gitabit Internet port for client connection, and to eight or twelve 100-bit NAS server ports, each NAS server 12 is configured with 100-bits/sec piece. A data transfer forwarder sends information to the corresponding 100-bits port for each NAS server 12. The number and type of switches 16 further depends on the number of NAS servers 12 connected to each switch 16, and data streaming bandwidth and rate requirements. Example switches are manufactured by Cisco (TM) and 3com (TM).

According to the present invention NAS servers 12 are used scalably to efficiently deliver video streams to clients 18, under the control of one or more management controllers 14 that preferably provide a single point of contact/interface to the clients 18 via the network 17. As more bandwidth and data streams are required, more NAS servers 12 and routers/switches 17 are added to the video server 10 to deliver more streams. Because each NAS server 12 operates independent of other NAS servers 12 without sharing internal resources, there is no resource contention in a video server 10 according to the present invention, that exists in conventional video servers such as those utilizing SMP machines. Further, as there is no need for intra-node routing and communication, there is no communication bottleneck between the NAS servers 12 in a video server 10 according to the present invention, as exists in conventional video servers such as those using MPP systems. The per stream price is low, specially for delivering a large number of streams end users.

### Management Controller

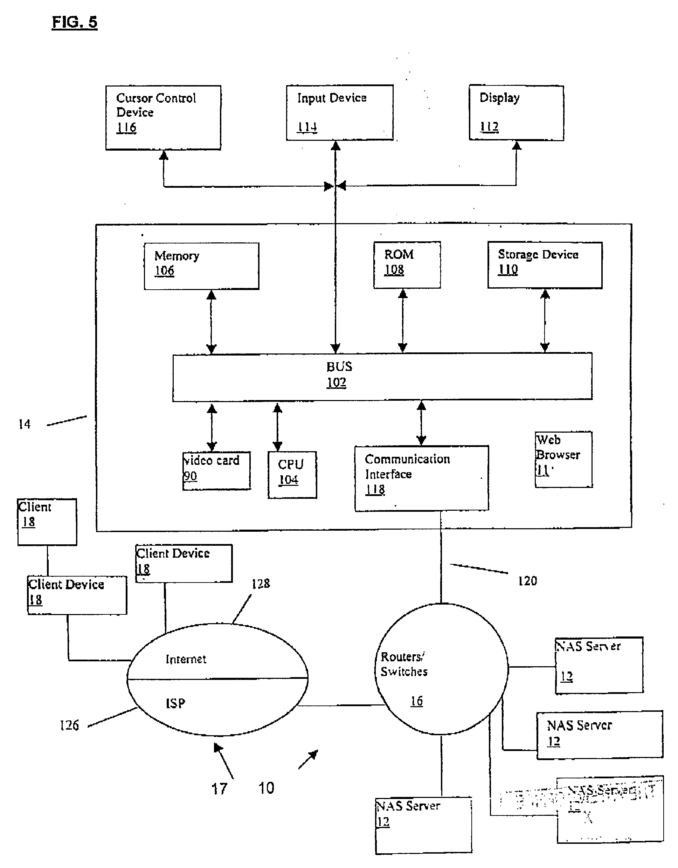

FIG. 5 shows a more detailed block diagram of the video server 10 of FIG. 1, connected to client 18 via the network 17. In one example, the management controller can comprise a computer system with computation and communication capacity depending on the number of video streams. Such a computer system is configured software to assigns/map clients NAS servers as described herein, whereby each NAS transparently delivers a video stream to an assigned/corresponding client. In one example, Web server technology provides data streaming link between each NAS server and corresponding client.

In the example of FIG. 5, the management controller 14 comprises a computer system which includes a bus 102 or other communication mechanism for communicating information, and a processor (CPU) 104 coupled with the bus 102 for processing information. The computer system 14 also includes a main memory 106, such as a random access memory (RAM) or other dynamic storage device, coupled to the bus 102 for storing information and program instructions to be executed by the processor 104. The main memory 106 also may be used for storing temporary variables or other intermediate information during execution or instructions to be executed by the processor 104. The computer system 14 further includes a read only memory (ROM) 108 or other static storage device coupled to the bus 102 for storing static information and instructions for the processor 104. a storage device 110, such as a magnetic disk or optical disk, is provided and coupled to the bus 102 for storing information and instructions. The bus 102 may contain, for example, thirty-two address lines for addressing video memory or main memory 106. The bus 102 can also include, for example, a 32-bit data bus for transferring data between and among the components, such as the CPU 104, the main memory 106, video memory and the storage 110. Alternatively, multiplex data / address lines may be used instead of separate data and address lines.

In one embodiment, the CPU 104 comprises a microprocessor manufactured by Motorola(R), such as the 680x0 processor or a microprocessor manufactured by Intel(R), such as the 80X86, or Pentium(R) processor, or a SPARC(R) microprocessor from Sun Microsystems(R). However, any other suitable microprocessor or microcomputer may be utilized. The main memory 106 can comprise dynamic random access memory (DRAM). And video memory (not shown) can comprise a dual-ported video random access memory.

The computer system 14 may be coupled via the bus 102 to a display 112, such as a cathode ray tube (CRT), for displaying information to a computer user. An input device 114, including alphanumeric and other keys, is coupled to the bus 102 for communicating information and command selections to the processor 104. Another type of user input device comprises cursor control 116, such as a mousse, a trackball, or cursor direction keys for communicating direction information and command selections to the processor 104 and for controlling cursor movement on the display 112. This input device typically has two degrees of freedom in two axes, a first axis (e.g., x) and a second axis (e.g., y) that allows the device to specify positions in a plane.

According to one embodiment of the invention, the steps of the processes of the present invention is provided by computer systems 14 in response to the processor 104 executing one or more sequences of one or more instructions contained in the main memory 106. Such instructions may be read into the main memory 106 from another computer-readable medium, such as the storage device 110. Execution of the sequences of instructions contained in the main memory 106 causes the processor 104 to perform the process steps described herein. One or more processors in a multi-processing arrangement may also be employed to execute the sequences of instructions contained in the main memory 106. In alternative embodiments, hard-wired circuitry such as Application Specific Integrated Circuit (ASIC) may be used in place of or in combination with software instructions to implement the invention. Thus, embodiments of the invention are not limited to any specific combination of hardware circuitry and software.

The term "computer-readable medium" as used herein refers to any medium that participated in providing instructions to the processor 104 for execution. Such a medium may take may forms, including but not limited to, non-volatile media, volatile media, and transmission media. Non-volatile media includes, for example, optical or magnetic disks, such as the storage device 110. Volatile media includes dynamic memory, such as the main memory 106. Transmission media includes coaxial cables, copper wire and fiber optics, including the wires that comprise the bus 102. Transmission media can also take the form of acoustic or light waves, such as those generated during radio wave and infrared data communications.

Common forms of computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, an EPROM, a FLASH-EPROM, any other memory chip or cartridge, a carrier wave as described hereinafter, or any other medium from which a computer can read.

Various forms of computer readable media may be involved in carrying one or more sequences of one or more instructions to the processor 104 for execution. For example, the instructions may initially be carried on a magnetic disk of a remote computer. The remote computer can load the instructions into its dynamic memory and send the instructions over a telephone line using a modem. A modem local to the computer system 14 can receive the data on the telephone line and use an infrared transmitter to convert the data to an infrared signal. An infrared detector coupled to the bus 102 can receive the data carried in the infrared signal and place the data on the bus 102. The bus 102 carries the data to the main memory 106, from which the processor 104 retrieves and executes the instructions. The instructions received from the main memory 106 may optionally be stored on the storage device 110 either before or after execution by the processor 104.

The computer system 14 also includes a communication interface 118 coupled to bus the 102. The communication interface 118 provides a two-way data communication coupling to a network link 120 that is connected to routers 16. For example, the communication interface 118 may be an integrated services digital network (ISDN) card or a modern to provide a data communication connection to a corresponding type of telephone line, which can comprise part of the network link 120 . As another example, the communication interface 118 may be a local area network (LAN) card to provide a data communication connection to a compatible LAN. Wireless links may also be implemented. In any such implementation, the communication interface 118 sends and receives electrical electromagnetic or optical signals that carry digital data streams representing various types of information.

The network link 120 typically provides data communication through one or more networks to other data devices. For example, the network link 120 may provide a connection through a local network to a host/server computer or to data equipment operated by an Internet Service Provider (ISP) 126 via switched 16. The ISP 126 in turn provides data communication services through the world wide packet data communication network now commonly referred to as the "Internet" 128. The Internet 128 uses electrical electromagnetic or optical signals that carry digital data streams. The computer system 14 further includes web server 11 for providing e.g. a user interface to the clients 18 for requesting vide content from the video server 10. In one example said user interface can include a list of available video content files in the video server and ways of selecting content files for viewing, including optionally payment terms.

The computer system 12 can send messages and receive data, including program code, through the communication interface 118. In the Internet example, clients 18 can transmit code (e.g., program instructions, HTML, etc.) for an application program through the internet 128, the ISP 126, and communication interface 118.

The example versions of the invention described herein can be implemented as logical operations in a the controller 14. The logical operations of the present invention can be implemented as a sequence of steps executing on controller 14. The implementation is a matter of choice and can depend on performance of the controller 14 implementing the invention. As such, the logical operations constituting said example versions of the invention are referred to for e.g. as operations, steps or modules.

Referring to FIG. 5, video contents encoding (e.g., encoding to MPEG and vice versa) can be performed using existing encoders 90 such as e.g. PCI video capture card or external video capture equipment, installed on or connected to the video server management controller 14.

The management controller 14 can receive video information to store on NAS servers 12, wherein such content from e.g. DVD, CD ROM, video camera etc. is encoded for storage in the NAS servers 12. In one example, a video camera generated video information can be transmitted as a data stream to the video server 10. The management controller 14 uses the video encoding card 90, so that the video stream can be encoded as e.g. MPEG, to store on NAS servers 12. In another example, video from DVD or video tape in a format that is not suitable for storage on NAS servers 12, is encoded (converted) to a suitable format by the management controller 14 using a video encoding card 90.

The present invention has been described in considerable detail with reference to certain preferred versions thereof; however, other versions are possible. Therefore, the spirit and scope of the appended claims should not be limited to the description of the preferred versions contained herein.

## Claims

1. A method for communicating content to a plurality of clients, comprising the steps of:
(a) providing multiple network attached storage (NAS) servers:
(b) storing content files on each NAS server for access by one or more clients;
(c) receiving a request for a content file from a client via a communication link;
(d) selecting one of the NAS servers that stores the requested content file;
(e) establishing a data stream between that client and the selected NAS server; and .
(f) providing the requested content file from the selected NAS to the requesting client via the data stream, independent of other NAS servers.

2. The method of claim 1, wherein step (d) further includes the steps of determining if one of the NAS servers stores the requested content file, and if so, selecting that NAS server and performing steps (e) and (f).

3. The method of claim 1, wherein:
step (a) further includes the steps of obtaining identification information from each NAS server and maintaining that information;
step (b) further includes the steps of maintaining content information corresponding to each identified NAS server; and
step (d) further includes the steps of checking the content information to determine if one of the identified NAS servers stores the requested content file. and if so, selecting that NAS server and performing steps (e) and (f).

4. The method of claim 1, wherein:
step (a) further includes the steps of providing one or more spare NAS servers;
step (b) further includes the steps of storing content files on said spare servers; and
the method further including the steps of:
(g) detecting a fault in an NAS server currently providing requested content file to a client;
(h) identifying a spare NAS server storing that requested content file; and
(i) selectively re-establishing said data stream between that client and the spare NAS storing the requested content file, wherein that spare NAS server provides the content file to the client via the data stream, independent of other NAS servers.

5. The method of claim 1, wherein step (e) further includes the steps of authenticating the identity of the client before providing the requested content file to the client.

6. The method of claim 1, wherein step (f) further includes the steps of receiving authentication information from that client, verifying the authentication information, and providing the requested content file only if the authentication information is verified.

7. The method of claim 1, wherein:
step (c) further includes the steps of: receiving multiple requests for content files from multiple clients;
step (d) further includes the steps of: for each requesting client, selecting one of the NAS servers that stores the content file requested by that client;
step (e) further includes the steps of: establishing a data stream between each requesting client and the selected NAS server for that client; and
step (f) further includes the steps of: providing each requested content file from a selected NAS server to the requesting client via the corresponding data stream, independent of other NAS servers.

8. The method of claim 7, wherein said multiple requests are random in time.

9. A video server for communicating content to a plurality of clients, comprising:
one or more network attached storage (NAS) servers, each NAS server storing content files for access by one or more clients; and
a management controller connected to the clients and the NAS servers via a communication link, wherein the management controller receives a request for a content file from a client, and selectively establishes a data stream between that client and a selected NAS server which stores the requested content file, such that the selected NAS server provides the content file to the client via the data stream, independent of other NAS servers.

10. The video server of claim 9 further comprising a switch for connecting the clients to the NAS servers in response to control signals, via a communication line.

11. The video server of claim 10, wherein the switch is configured to provide data routing between the NAS server and the clients.

12. The video server of claim 10, wherein the management controller is connected to the clients and the NAS servers by the communication link via the switch.

13. The video server of claim 12, wherein the switch is configured to provide data routing between the NAS server and the clients in response to control signals from the management controller.

14. The video server of claim 9, wherein at least one NAS server comprises one or more data storage devices and a storage controller for coordinating access to the data storage devices.

15. The video server of claim 9, wherein at least one NAS server concurrently provides multiple data streams to multiple clients.

16. The video server of claim 9, further comprising one or more spare NAS servers, such the management controller is configured to detect a fault in an NAS server currently providing requested content file to a client, and to identify a spare NAS server storing that requested content file, such that the management controller selectively re-establishes said data stream between that client and the spare NAS storing the requested content file, wherein that spare NAS server provides the content file to the client via the data stream, independent of other NAS servers.

17. The video server of claim 9, wherein management controller is configured to allow addition or removal of one or more NAS servers.

18. The video server of claim 9, wherein the management controller includes an NAS monitor module which monitors operation of each NAS server, and selects NAS servers to provide content files to clients.

19. The video server of claim 18, wherein the management controller includes a client interface module which receives requests from clients and forwards the requests to the NAS monitor module.

20. The video server of claim 9, wherein each NAS server includes a data streaming interface module which provides service for reading content files from that NAS server and sending the data to the requesting client via a data stream.

21. A management controller for a video server for communicating content from multiple NAS servers storing content files to a plurality of clients, comprising:
a client interface module which receives requests from clients via a communication link;
an NAS monitor module which monitors operation of each NAS server, and receives a request for a content file from a client via the client interface, such that the NAS monitor module selectively establishes a data stream between that client and a selected NAS server which stores the requested content file, such that the selected NAS server provides the content file to the client via the data stream, independent of other NAS servers.

22. The management controller of claim 21, wherein at least one NAS server comprises one or more data storage devices and a storage controller for coordinating access to the data storage devices.

23. The management controller of claim 21, wherein at least one NAS server concurrently provides multiple data streams to multiple clients.

24. The management controller of claim 21, wherein one or more NAS servers are spare NAS server, and the NAS monitor module is configured to detect a fault in an NAS server currently providing requested content file to a client, and to identify a spare NAS server storing that requested content file, such that the management controller selectively re-establishes said data stream between that client and the spare NAS storing the requested content file, wherein that spare NAS server provides the content file to the client via the data stream, independent of other NAS servers.

25. The management controller of claim 21, wherein management controller is configured to allow addition or removal of one or more NAS servers.

26. The management controller of claim 21, wherein each NAS server includes a data streaming interface module which provides service for reading content files from that NAS server and sending the data to the requesting client via a data stream.
